# EUROPEAN PATENT SPECIFICATION

(11) **EP 3 616 506 B1**
(45) Date of publication and mention of the grant of the patent: **06.03.2024**
(21) Application number: 19190115.6
(22) Date of filing: 05.08.2019
(51) Int. Cl.: A01K 1/01, A01K 5/02

(54) **AUTONOMOUS VEHICLE, METHOD FOR MODIFYING SUCH A VEHICLE, AND CONVERTING KIT**
AUTONOMES FAHRZEUG, VERFAHREN ZUR MODIFIZIERUNG EINES SOLCHEN FAHRZEUGS UND UMRÜSTSATZ
VÉHICULE AUTONOME, PROCÉDÉ DE MODIFICATION D'UN TEL VÉHICULE ET KIT DE CONVERSION

(30) Priority: 31.08.2018 NL 2021535
(43) Date of publication of application: 04.03.2020
(73) Proprietor: Lely Patent N.V., 3147 PB Maassluis (NL)
(72) Inventor: VAN KESTER, Robin Andreas Albertus, 3147 PB Maassluis (NL)
(74) Representative: Octrooibureau Van der Lely N.V.

(56) References cited:
- US-A1- 2014 319 848
- Lely Industries: "LELY DISCOVERY 120 COLLECTOR Mobile Barn Cleaner", , 15 November 2017 (2017-11-15), XP055583513, Retrieved from the Internet: URL:http://www.lelynet.com/_layouts/15/doc ument/TechDocHandler.aspx?name=5-4008-8501 -0_B.pdf&mode=view [retrieved on 2019-04-25]

## Description

The invention relates to an autonomous, and preferably unmanned, vehicle for performing an animal-related operation, in particular cleaning a floor in an animal shed containing animals, such as cows, which vehicle comprises:
- a drive system for driving the vehicle, which drive system is provided with at least one electrical drive motor,
- an electronic control system which is connected to the drive system in order to control it,
- a battery system for storing electrical energy, which battery system is connected to the drive system and the control system,
- a housing having an interior space, in which the control system and/or the battery system are at least partly fitted, which housing is provided with an access opening for making the interior space accessible, for example for maintenance work, and a cover, which is displaceable between a closed position, in which the access opening is closed by the cover, and an open position, in which the interior space of the housing is accessible via the access opening,
- a retaining device for releasably retaining the cover in the closed position.

The Lely Discovery 120 Collector ^{®} is known from the prior art, see XP055583513. This is an autonomous vehicle for sucking up manure from the floor of an animal shed. The vehicle is supported on the floor by means of two wheels and a manure slide. The vehicle is situated in a very dirty environment between the animals in the animal shed, as a result of which the vehicle becomes heavily soiled with manure and urine from the animals in use. The vehicle is able to find its way autonomously by means of an electronic control system using sensors, such as an ultrasound sensor and a gyroscope. On the basis of the signals detected by the sensors, the control system controls a drive system with electrical drive motors for the wheels of the vehicle. Due to the fact that the two rear wheels are operable independently from each other, it is possible for the vehicle to be steered and follow a desired route. The drive system and the control system are supplied by a battery system on board of the vehicle.

The electronic control system and the battery system comprise relatively expensive and delicate components, such as the sensors, which are arranged in an interior space of a housing of the vehicle. The interior space comprises an access opening which is closed by a cover during use. The cover is hingeable about a substantially horizontal hinge axis between a closed position and an open position. In the open position, the interior space is accessible, for example for maintenance work. The cover is automatically secured mechanically upon closure and retained in the closed position in order to protect the interior space against the very dirty environment of the animal shed during use. The automatic securing means can easily be released by operating a handle.

However, it has been found in practice, that the cover does not always remain closed. If the cover is not properly closed, the automatic securing means is not activated, i.e. the securing means does not properly retain the cover in the closed position. In addition, there is a risk that the automatic securing means inadvertently opens during use, for example as a result of vibrations. In addition, it is possible that the animals inadvertently operate the handle for releasing the cover, after which the animals can easily move the cover to the open position. As a result thereof, the interior space containing the components of the electronic control system and the battery system is exposed to the very dirty environment of the animal shed. The manure and urine of the animals in the animal shed can damage the electronic control system and the battery system. It is also possible that the animals will stand in the interior space, which will likewise cause expensive damage.

It is an object of the invention to provide an improved autonomous vehicle for performing an animal-related operation, in particular an autonomous vehicle for cleaning a floor in an animal shed containing animals, such as cows, wherein maintenance work to the electronic control system and the battery system are readily possible and the risk of damage due to the very dirty environment, such as by manure or urine, is reduced at the same time.

This object is achieved, according to the invention as defined in claim 1, by the fact that the vehicle comprises a locking device which locks the cover in a partly open position close to the closed position if the cover is released by the retaining device and is moved from the closed position in the direction of the open position, and this locking device is operable so as to reach an unlocked position, while the cover is partly open, in particular with the cover in or close to this partly open position, in order to make it possible for the cover to be movable from the partly open position to the open position. The vehicle according to the invention comprises a retaining device for releasably retaining the cover in the closed position, which is designed, for example, like the automatic mechanical securing means of the known Lely Discovery 120 Collector ^{®}, as well as a locking device for the cover which can only be unlocked after the retaining device has released the cover and the cover has moved slightly from the closed position in the direction of the open position.

By means of the retaining device and the locking device, the cover according to the invention is only movable to the completely open position in two steps, wherein the second step of unlocking the locking device only becomes possible once the first step of releasing the retaining device has been carried out. As a result thereof, it is virtually impossible for the cover to open inadvertently. At the same time, a person, such as a farmer or maintenance engineer, is still readily able to open the cover by hand and without the use of tools in order to carry out maintenance work on the components of the electronic control system and the battery system. In addition, the partly open position, in which the cover is retained by the locking device, i.e. after the cover has been released by the retaining device and has subsequently been moved slightly in the direction of the open position, is close to the closed position. In particular, in the partly open position, the cover is at a distance from the closed position which is less than 20 cm, preferably less than 10 cm. With such a small opening, it is impossible for manure or urine to end up in the interior space. As a result thereof, the risk of damage by the very dirty environment is significantly reduced. Also, it is not possible for animals to stand in the interior space.

The retaining device according to the invention may be embodied in various ways.

For example, the retaining device comprises a securing device which has a securing position, in which the cover is secured in the closed position, and wherein the securing device is operable from this securing position to a a release position, in which the cover is movable from the closed position in the direction of the open position. The securing device according to this embodiment forms a first locking device, whereas the locking device for locking the cover in the partly open position forms a second locking device. While the vehicle is moving, the cover is secured in the closed position by the securing device, i.e. the first locking device. The securing device is operable, for example by manually unlocking it, from the securing position to the release position, in which the cover can move to the partly open position. Once this is reached, the cover is locked by the locking device according to the invention, i.e. the second locking device, which will subsequently also have to be unlocked in order to move the cover further into the completely open position and gain access to the interior space.

According to the invention, when the securing device is in the release position, it is possible for the securing device to be moved to the securing position automatically when closing the cover. In this case, the securing device automatically ends up in the securing position when closing the cover, for example as is the case with the automatic mechanical securing means of the known Lely Discovery 120 Collector ^{®}. In addition, the securing device may comprise a manually operable element which is arranged on the outside of the vehicle, wherein the securing device is operable from the securing position to the release position by operating the manually operable element. The manually operable element comprises, for example, a handle or button. This is simple and reliable.

In an alternative embodiment according to the invention, the retaining device comprises a snap-fit device, wherein the cover is snap-fitted into the closed position upon closure thereof, and wherein the cover is releasable from the snap-fit device by applying a force on the cover which is directed towards the open position and which is greater than a threshold value determined by the snap-fit device. The snap-fit device, which may also be referred to as a click-fit device, comprises, for example, one or more snap-fit means which are arranged on the cover and the housing. In this embodiment, the cover is click-fitted upon closure by means of the snap-fit device and thus retained in the closed position. The costs of such a snap-fit device are relatively low. At the same time, the cover remains reliably in the closed position, even if the vehicle is subjected to vibrations during moving. In order to open the cover, a person pulls on the cover using sufficient force, so that the cover snaps out of the snap-fit connection (first step). In this case, the cover is retained by the locking device according to the invention, which then has to be unlocked (second step) in order to be able to open the cover completely.

In an embodiment according to the invention, the cover is hingeable between the closed position and the open position about a substantially horizontal axis, wherein the cover, upon moving it from the closed position in the direction of the open position, is displaced upwards, counter to the action of the force of gravity. If the cover is released at a suitable height above the closed position, the cover will, on account of its own weight, become fixed on the retaining device, such as the above-described securing device or snap-fit device. In that case, the cover does not have to be pushed down until it reaches the closed position. This is user-friendly and reliable.

The locking device according to the invention, i.e. the locking device for locking the cover in the partly open position, may be designed in various ways.

It is preferable for the locking device to be provided with a hook part and an engagement part, wherein one of these parts is arranged on the cover and the other part on the housing, and wherein the hook part is movable, preferably hingeable, between an engagement position, in which, upon moving the cover from the closed position to the partly open position, the hook part engages with the engagement part for locking the cover, and a release position, in which the hook part is out of engagement with the engagement part and the cover is movable beyond the partly open position in the direction of the open position. As a result thereof, the risk of an animal, such as a cow, inadvertently opening the cover is minimal. In order to move the cover to the open position, the hook part has to be moved to the release position in the partly open position of the cover, i.e. via a small intermediate space between the cover and the edge of the access opening. The release position of the hook part determines the unlocked position of the locking device according to the invention. It is virtually impossible for an animal, such as a cow, to unintentionally unlock the locking device according to the invention. This also significantly reduces the risk of damage to the electronic components in the interior space, such as by manure or urine from the animals or due to the fact that the animals step into the interior space.

The hook part may be arranged in such a way that the hook part tends to move towards the engagement position on account of the force of gravity. However, it is preferable if the hook part is prestressed into the engagement position by means of a spring means. The spring means comprises, for example, a torsion spring. By using the spring means, it is ensured that the hook part engages with the engagement part when it is moved from the closed position to the partly open position. This is useful for the reliability of the lock according to the invention.

In an embodiment according to the invention, the hook part is situated at a distance from the engagement part in the closed position of the cover, wherein the hook part only comes into engagement with the engagement part when moving the cover from the closed position to the partly open position. In the closed position, the cover is retained by the retaining device, such as the above-described securing device or snap-fit device. The hook part of the lock according to the invention is then inactive. The hook part only engages with the engagement part, i.e. the locking device according to the invention only locks the cover, after the cover has been released by the retaining device and the cover has been moved from the closed position into the partly open position. As a result thereof, the cover can only be opened completely by performing two specific operations in succession. The risk of the cover being opened unintentionally is thus minimal.

In a preferred embodiment according to the invention, the hook part and/or the engagement part are formed in such a way that, after the hook part has engaged with the engagement part in the engagement position by moving the cover from the closed position to the partly open position, the cover has to be moved slightly back from the partly open position in the direction of the closed position in order to bring the hook part into the release position and out of engagement with the engagement part, and wherein the cover is only then, while the hook part is held in the release position, movable beyond the partly open position in the direction of the open position,. By requiring such a specific manipulation of the hook part and the cover in order to open the cover, it is ensured that the cover can only be opened intentionally by a person. The electronic components in the interior space are safely protected while the vehicle moves between the animals in the animal shed.

In an embodiment according to the invention, the housing comprises a detachable plate part, wherein one of the hook part and the engagement part is arranged on that plate part of the housing, and wherein the other of those parts is arranged on the cover. The housing of the known Lely Discovery 120 Collector ^{®} has a detachable plate part. By replacing the plate part of the housing with a replacement plate part comprising the engagement part, and fitting the hook part to the cover, or vice versa, an existing Lely Discovery 120 Collector ^{®} which is already in use on a farm can be retrofitted with the locking device according to the invention. As a result thereof, the above-described advantages are achieved. The costs of such a modification are low.

According to the invention, the locking device can lock the cover in a partly open position near the closed position. In particular, the housing comprises a peripheral edge which defines the access opening, wherein the cover comprises an outer edge which, in the partly open position, is situated at a distance from the peripheral edge of the access opening which is less than 20 cm, preferably less than 10 cm, such as less than 5 cm. In the partly open position, such a distance defines a gap-like intermediate space between the edge of the access opening and the cover. An animal is not able to unintentionally operate the locking device according to the invention via this intermediate space.

In a preferred embodiment according to the invention, the vehicle comprises a cleaning device for cleaning a floor in an animal shed containing animals, in particular cows. The cleaning device comprises, for example, a manure-sucking device for sucking up manure from the floor of the animal shed, and/or a manure slide for moving manure across the floor of the animal shed, in particular through slots in a slatted floor of the animal shed. The vehicle according to the invention is designed to drive between animals in an animal shed. Since the vehicle is then in a very dirty environment, it is particularly important for delicate and expensive components in the interior space of the housing of the vehicle to be protected.

The invention also relates to a method as defined in claim 13, for modifying an autonomous vehicle as described above, in particular on a farm, wherein a locking device according to the invention as described above is arranged on the vehicle. In particular, the housing of the vehicle comprises a detachable plate part, wherein one of the hook part and the engagement part is arranged on said plate part of the housing, and wherein the other of those parts is arranged on the cover, and wherein the detachable plate part of the housing of the vehicle is replaced by a replacement plate part with one of the hook part and the engagement part, and wherein the other of those parts is arranged on the cover. The replacement of the plate part in its entirety is simpler than retrofitting the engagement part or the hook part to the existing plate part. Therefore, an existing autonomous vehicle which is already in use on a farm can readily be converted, so that the above-described advantages are achieved, in particular the improved protection of the electronic components.

The invention furthermore relates to a converting kit as defined in claim 15, for modifying an autonomous vehicle with a housing which comprises a detachable plate part, as described above, wherein the converting kit is provided with or consists of a replacement plate part for replacing the detachable plate part, an engagement part and a hook part. The engagement part is attached to the replacement plate part, for example by welding or otherwise. The hook part is configured to be fitted to the cover of the vehicle. Alternatively, the hook part may be attached to the replacement plate part, whereas the engagement part is fitted to the cover. The use of the converting kit makes converting an existing vehicle quick and simple.

The invention will now be explained in more detail with reference to the figures, in which:
Figure 1 shows a perspective view of a first embodiment of an autonomous vehicle according to the invention, wherein the cover is closed.
Figure 2 shows a perspective view of the vehicle illustrated in Figure 1, wherein the cover is open.
Figures 3a and 3b show perspective views of the retaining device and the locking device of the vehicle illustrated in Figure 1, wherein the cover is closed or partly open, respectively.
Figures 4a-4d show side views of various steps during the unlocking of the locking device of the vehicle illustrated in Figure 1.
Figure 5 shows a converting kit according to the invention.
Figure 6 shows a perspective view of a second embodiment of an autonomous vehicle according to the invention, wherein the cover is open.

An autonomous vehicle for cleaning a floor in an animal shed containing animals, such as cows, is denoted in the figures by reference numeral 1. The vehicle 1 is driverless and self-propelled. The vehicle 1 is situated between the animals, i.e. in a very dirty environment containing manure and urine.

In this exemplary embodiment, the vehicle 1 comprises a cleaning device 7, which is designed to suck up manure and/or urine from the floor 2. Such a cleaning system 7 is described in detail in WO 2013/010785 A1, and will not be explained in more detail now. It should be noted that the cleaning system may also be designed differently. For example, the cleaning system of the vehicle 1 comprises a manure slide for moving manure and/or urine across a slatted floor with slots. Such a cleaning system is described in detail in WO 00/70937 A1, the contents of which will not be explained in more detail now either.

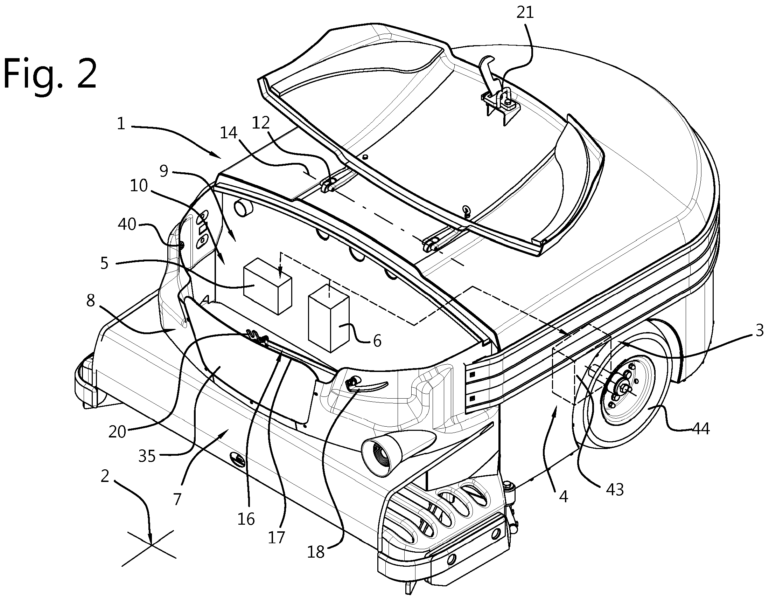

The vehicle 1 comprises an electrical drive system 4, a battery system 5 for storing electrical energy and an electronic control system 6 for controlling at least the drive system 4 (shown diagrammatically in Figure 2). The drive system 4, the battery system 5 and the control system 6 are operatively connected to each other, as is indicated in Figure 2 by dashed lines.

The drive system 4 comprises two electrical drive motors 43, only one drive motor 43 of which has been shown diagrammatically in Figure 2. The vehicle 1 comprises two rear wheels 44, which are each drivable by means of in each case a drive motor 43. In this exemplary embodiment, the vehicle 1 rests on the floor by means of a manure slide on its front side. However, the vehicle 1 may also rest on the floor in another way, for example by means of a front wheel or a support element, such as a slide block. The drive motors 43 of the rear wheels 44 are independently controllable by means of the control system 6. Thus, the vehicle 1 can be steered, i.e. the control system 6 is able to determine the direction of travel of the vehicle 1 and make the vehicle 1 follow a desired route.

The electronic control system 6 comprises a control unit, which is shown diagrammatically in Figure 2. The control unit comprises, for example, a printed circuit board and other electronic components. The battery system 5 comprises a rechargeable battery (likewise shown diagrammatically in Figure 2). The drive system 4 and the control system 6 are supplied with electrical energy by means of the battery system 5. The rechargeable battery of the battery system 5 and the control unit of the electronic control system 6 are accommodated in the interior space 9 of a housing 8 of the vehicle 1. Obviously, further components may be arranged in the interior space 9. Preferably, as many as possible components which are not able to withstand manure and/or urine, which are often also relatively expensive, such as electronics, are accommodated in the interior space 9.

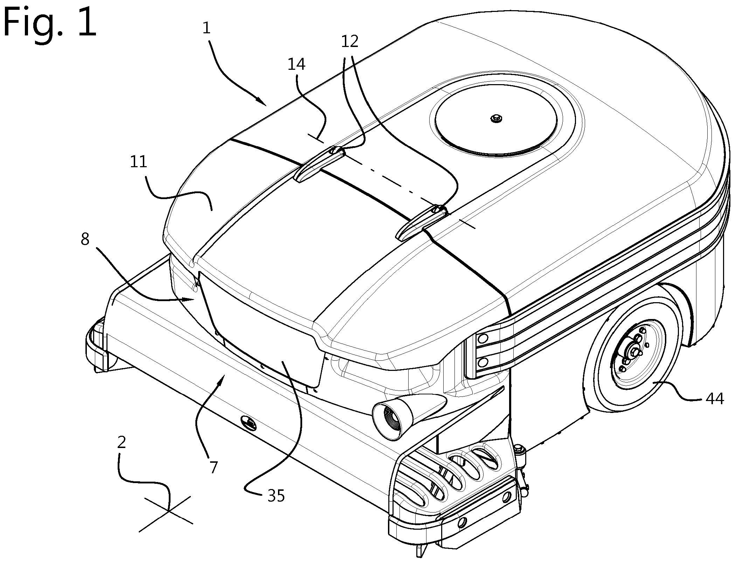

The housing 8 comprises an access opening 10 in order to render the interior space 9 accessible, for example for maintenance work. The access opening 10 is closable by a cover 11, which is connected to the vehicle 1 by means of hinges 12. The cover 11 is hingeable about a horizontal hinge axis 14 defined by the hinges 12 between a closed position illustrated in Figure 1 and an open position (see Figure 2). In the closed position, the access opening 10 is closed by the cover 11, i.e. the cover 11 engages over a peripheral edge 40 of the access opening 10. The interior space 9 is then protected from the very dirty external environment of the vehicle 1. In the open position, the interior space 9 of the housing 8 is accessible via the access opening 10.

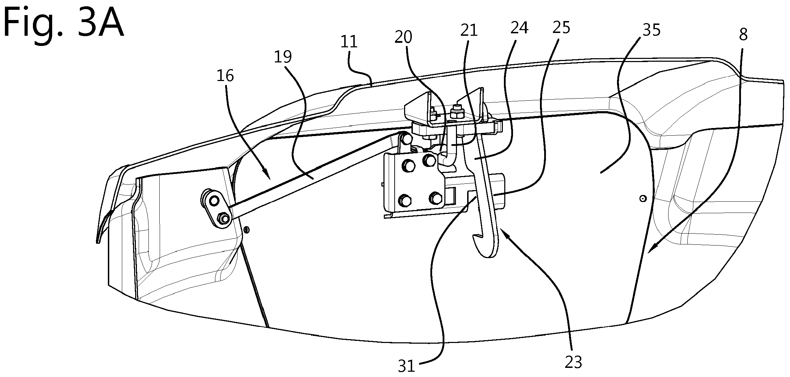

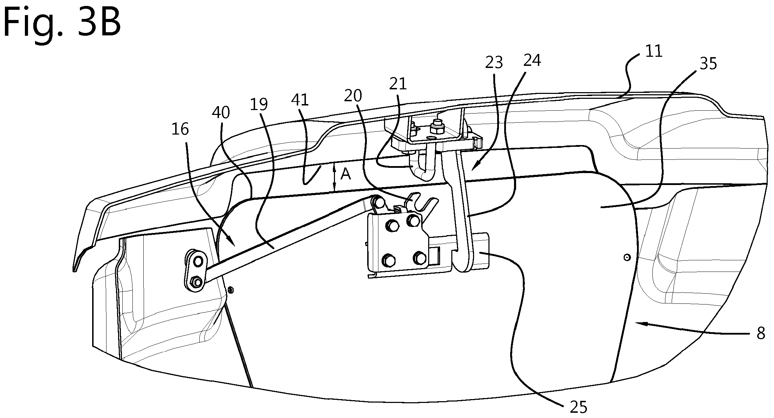

In use, it is important that the cover 11 remains in the closed position, so that manure and/or urine cannot damage the components accommodated in the interior space 9 and no animals can stand in the interior space 9 either. The vehicle 1 comprises a retaining device 16 for releasably retaining the cover 11 in the closed position. In the embodiment illustrated in Figure 1, the retaining device 16 comprises a securing device 17, which is shown most clearly in Figures 3a and 3b.

The securing device 17 has a securing position, in which the cover 11 is secured in the closed position (see Figure 3a). The securing device 17 comprises an eyelet 21, which is attached to the cover 11, and a securing part 20, which is connected to a manually operable element on the outside of the vehicle 1, in this exemplary embodiment a handle 18, via a transmission mechanism 19. By allowing the cover 11 to drop down under the effect of the force of gravity, the eyelet 21 engages with the securing part 20 in such a way that the securing position is reached automatically. Via the handle 18, the securing device 17 is operable from the securing position to a release position illustrated in Figure 3b, in which the eyelet 21 is released by the securing part 20 and the cover 11 is movable from the closed position upwards.

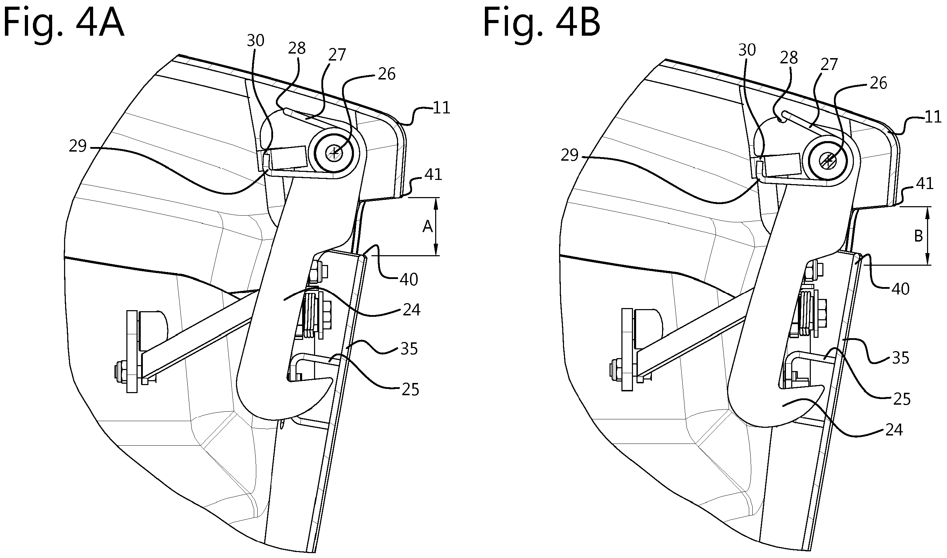

In order to ensure that the cover 11 can only be opened completely by a person on purpose, the vehicle 11 according to the invention comprises a locking device 23. If the cover 11 is released by the securing device 17 and is moved from the closed position in the direction of the open position, the locking device 23 locks the cover 11 in a partly open position near the closed position, i.e. the cover 11 is locked while leaving a gap-like opening between the peripheral edge 40 of the access opening 10 and an outer edge 41 of the cover 11. The height A of the gap-like opening (see Figures 3b and 4a) is for example approximately 10 cm.

In this exemplary embodiment, the locking device 23 comprises a hook part 24 and an engagement part 25. The engagement part 25 is attached to a plate part 35 which forms the front of the housing 8. The hook part 24 is connected to the cover 11 and is situated next to the eyelet 21 of the securing device 17. The hook part 24 is hingeable about a hinge axis 26 between an engagement position and a release position. The hook part 24 is prestressed into the engagement position (see Figures 3a, 3b, 4a) by means of a spring means, in this exemplary embodiment a torsion spring 27 which is prestressed between a recess 28 in the hook part 24 and a stop which is attached to the cover 11 and has an opening 30 in which a curved end 29 of the torsion spring 27 is accommodated.

As is illustrated in Figure 3a, in the closed position of the cover 11, the hook part 24 is situated at a distance from the engagement part 25. The hook part 24 only engages with the engagement part 25 of the housing 8 when the cover 11 is moved upwards from the closed position to the partly open position (see Figures 3b and 4a). The cover 11 is then locked by the hook part 24 and the engagement part 25 of the locking device 23.

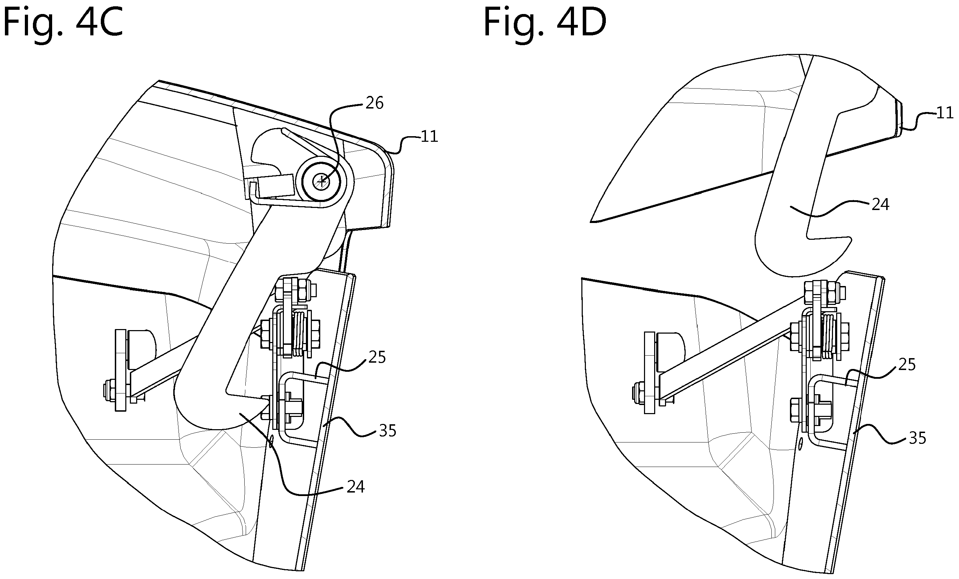

The hook part 24 and the engagement part 25 are formed in such a way that the cover 11 has to be moved slightly back from the partly open position into the direction of the closed position (see Figure 4b) in order to bring the hook part 24 into the release position and out of engagement with the engagement part 25 counter to the action of the prestressed torsion spring 27. The distance B illustrated in Figure 4b is the height between the peripheral edge 40 of the access opening 10 and the outer edge 41 of the cover 11 after the cover 11 has been lowered slightly. The distance B is smaller than the distance A illustrated in Figures 3b and 4a. Only then, while the hook part 24 is held in the release position, i.e. the hook part 24 stays out of engagement with the engagement part 25, can the hook part 24 move along the engagement part 25 and the cover 11 be moved beyond the partly open position towards the completely open position (see Figures 4c and 4d).

In order to unlock the cover 11 according to the invention, the securing device 17 is therefore first released by operating the handle 18. Thereafter, the cover 11 is lifted to the partly open position and locked by the locking device 23. This locking device 23 is then unlocked by lowering the cover 11 slightly, and then bringing the hook part 24 to the release position counter to the action of the torsion spring 27 by reaching into the gap-like opening with a hand, i.e. while the cover is partly open. Only then is it possible to move the cover further until it is in the completely open position. As a result thereof, it is hardly possible, if at all, for an animal to open the cover 11 unintentionally. The interior space 9 containing the relatively expensive components is very reliably protected from the dirty environment in which the vehicle 1 operates.

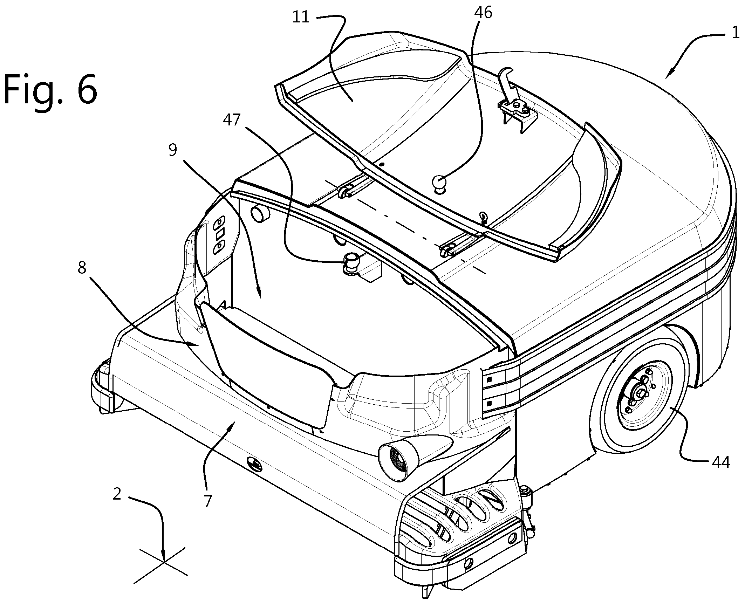

Figure 6 shows a second embodiment according to the invention, which only differs from the first embodiment in that the retaining device 16 comprises a snap-fit device, which may also be referred to as a click-fit device, instead of the securing device 17. In this exemplary embodiment, the snap-fit device comprises a spherical snap-fit element 46 which is attached to the cover 11. When closing the cover 11, the snap-fit element 46 is snap-fitted or click-fitted in an receiving element 47. The cover 11 is releasable from the snap-fit device 46, 47 by exerting a force on the cover 11 in the direction of the open position which is greater than a threshold value determined by the snap-fit device 46, 47. The snap-fit device 46, 47 reliably retains the cover 11 in the closed position, so that the cover 11 does not, for example, bounce up and down if the vehicle 1 moves across uneven structures on the floor. At the same time, the snap-fit device 46, 47 can readily be pulled loose. The cover 11 may then be lifted to the partly open position, in which the locking device 23 locks the cover 11 as described above.

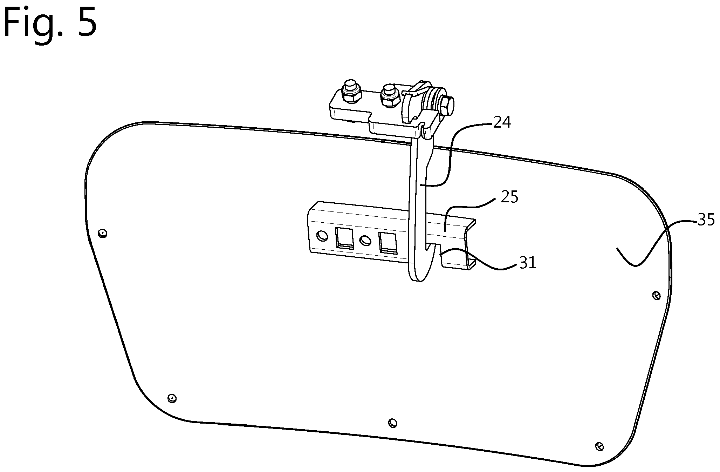

The locking device 23 according to the invention is not only suitable for new vehicles, but may also be retrofitted to existing vehicles which are already in use on a farm. The plate part 35 of the housing 8 is detachable by removing bolts. The plate part 35 of an existing vehicle can easily be replaced by a replacement plate part 35 with an engagement part 25 which is attached thereto, for example welded on (see Figure 5). By fitting the hook part 24 to the cover 11 of the existing vehicle, the locking device 23 is added. The conversion of an existing vehicle is readily possible by providing a converting kit comprising a replacement plate part 35 with engagement part 25 and the hook part 24 with associated components.

Although an autonomous vehicle for cleaning a floor of an animal shed is described above, the invention may also be used with other autonomous vehicles for performing an animal-related operation, such as an autonomous vehicle for pushing feed to a feeding fence, or an autonomous vehicle for automatically feeding animals, such as cows. Such vehicles are not situated in between the animals, but are nevertheless sufficiently close to the animals that identical or similar risks of exposure to manure and urine of the animals play a part.

## Claims

1. Autonomous vehicle for performing an animal-related operation, in particular cleaning a floor in an animal shed containing animals, such as cows, which vehicle (1) comprises:
- a drive system (4) for driving the vehicle (1), which drive system (4) is provided with at least one electrical drive motor (43),
- an electronic control system (6) which is connected to the drive system (4) in order to control it,
- a battery system (5) for storing electrical energy, which battery system (5) is connected to the drive system (4) and the control system (6),
- a housing (8) having an interior space (9), in which the control system (6) and/or the battery system (5) are at least partly arranged, which housing (8) is provided with an access opening (10) for making the interior space (9) accessible, and a cover (11), which is displaceable between a closed position, in which the access opening (10) is closed by the cover (11), and an open position, in which the interior space (9) of the housing (8) is accessible via the access opening (10),
- a retaining device (16) for releasably retaining the cover (11) in the closed position,
**characterized in that** the vehicle (1) comprises a locking device (23), which locks the cover (11) in a partly open position close to the closed position if the cover (11) is released by the retaining device (16) and is moved from the closed position in the direction of the open position, and said locking device (23) is operable so as to reach an unlocked position, while the cover is partly open, in order to make it possible for the cover (11) to be movable from the partly open position to the open position.

2. Vehicle according to Claim 1, wherein the retaining device (16) comprises a securing device (17) which has a securing position, in which the cover (11) is secured in the closed position, and wherein the securing device (17) is operable from said securing position to a release position, in which the cover (11) is movable from the closed position in the direction of the open position.

3. Vehicle according to Claim 2, wherein, when the securing device (17) is in the release position, the securing device (17) is automatically moved to the securing position when closing the cover (11), and wherein the securing device (17) comprises a manually operable element (18), which is arranged on the outside of the vehicle (1), and wherein the securing device (17) is operable from the securing position to the release position by operating the manually operable element (18).

4. Vehicle according to Claim 1, wherein the retaining device comprises a snap-fit device (46, 47), wherein the cover (11) is snap-fitted into the closed position upon closure thereof, and wherein the cover (11) is releasable from the snap-fit device (46, 47) by applying a force on the cover (11) which is directed towards the open position and which is greater than a threshold value determined by the snap-fit device (46, 47).

5. Vehicle according to one of the preceding claims, wherein the cover (11) is hingeable between the closed position and the open position about a substantially horizontal axis (14), and wherein the cover (11), upon moving it from the closed position in the direction of the open position upwards, is displaced counter to the action of the force of gravity.

6. Vehicle according to one of the preceding claims, wherein the locking device (23) is provided with a hook part (24) and an engagement part (25), wherein one of these parts (24, 25) is arranged on the cover (11) and the other part (24, 25) on the housing (8), and wherein the hook part (24) is movable between an engagement position, in which, upon moving the cover (11) from the closed position to the partly open position, the hook part (24) engages with the engagement part (25) for locking the cover (11), and a release position, in which the hook part (24) is out of engagement with the engagement part (25) and the cover (11) is movable beyond the partly open position in the direction of the open position.

7. Vehicle according to Claim 6, wherein the hook part (24) is prestressed into the engagement position by means of a spring means (27).

8. Vehicle according to Claim 6 or 7, wherein the hook part (24) is situated at a distance from the engagement part (25) in the closed position of the cover (11), and wherein the hook part (24) only comes into engagement with the engagement part (25) when moving the cover (11) from the closed position to the partly open position.

9. Vehicle according to one of Claims 6-8, wherein the hook part (24) and/or the engagement part (25) are formed in such a way that, after the hook part (24) has engaged with the engagement part (25) in the engagement position by moving the cover (11) from the closed position to the partly open position, the cover (11) has to be moved slightly back from the partly open position in the direction of the closed position in order to bring the hook part (24) into the release position and out of engagement with the engagement part, and wherein the cover (11) is only then movable beyond the partly open position in the direction of the open position, while the hook part (24) is held in the release position.

10. Vehicle according to one of Claims 6-9, wherein the housing (8) comprises a detachable plate part (35), and wherein one of the hook part (24) and the engagement part (25) is arranged on said plate part (35) of the housing (8), and wherein the other of those parts (24, 25) is arranged on the cover (11).

11. Vehicle according to one of the preceding claims, wherein the housing (8) comprises a peripheral edge (40) which defines the access opening (10), and wherein the cover (11) comprises an outer edge (41) which, in the partly open position, is situated at a distance from the peripheral edge (40) of the access opening (10) which is less than 20 cm, preferably less than 10 cm, such as less than 5 cm.

12. Vehicle according to one of the preceding claims, wherein the vehicle (1) is provided with a cleaning device (7) for cleaning a floor (2) in an animal shed containing animals, in particular cows.

13. Method for modifying an autonomous vehicle (1) according to the preamble of Claim 1, in particular on a farm, wherein a locking device (23) according to the characterising portion of Claim 1 is arranged on the vehicle (1).

14. Method according to Claim 13, wherein the vehicle (1) is configured according to Claim 10, and wherein the detachable plate part (35) of the housing (8) of the vehicle (1) is replaced by a replacement plate part (35) with one of the hook part (24) and the engagement part (25), wherein the other one of those parts (24, 25) is arranged on the cover (11).

15. Converting kit for carrying out the method according to Claim 14, wherein the converting kit is provided with a replacement plate part (35) for replacing the detachable plate part, an engagement part (25) and a hook part (24), wherein the engagement part (25) or the hook part (24) is attachable to the replacement plate part (35), and the other of these parts (24, 25) is configured to be fitted to the cover (11) of the vehicle (1).

## Patentansprüche

1. Autonomes Fahrzeug zum Durchführen eines tierbezogenen Vorgangs, insbesondere Reinigen eines Bodens in einem Tierstall, der Tiere, zum Beispiel Kühe, enthält, wobei das Fahrzeug (1) Folgendes umfasst:
- ein Antriebssystem (4) zum Antreiben des Fahrzeugs (1), wobei das Antriebssystem (4) mit mindestens einem elektrischen Antriebsmotor (43) versehen ist,
- ein elektronisches Steuerungssystem (6), das mit dem Antriebssystem (4) verbunden ist, um dieses zu steuern,
- ein Batteriesystem (5) zum Speichern elektrischer Energie, wobei das Batteriesystem (5) mit dem Antriebssystem (4) und dem Steuerungssystem (6) verbunden ist,
- ein Gehäuse (8) mit einem Innenraum (9), in dem das Steuerungssystem (6) und/oder das Batteriesystem (5) zumindest teilweise angeordnet sind, wobei das Gehäuse (8) mit einer Zugangsöffnung (10), um den Innenraum (9) zugänglich zu machen, und einer Abdeckung (11), die zwischen einer geschlossenen Stellung, in welcher die Zugangsöffnung (10) durch die Abdeckung (11) verschlossen ist, und einer geöffneten Stellung, in welcher der Innenraum (9) des Gehäuses (8) über die Zugangsöffnung (10) zugänglich ist, versehen ist,
- eine Haltevorrichtung (16) zum lösbaren Halten der Abdeckung (11) in der geschlossenen Position,
**dadurch gekennzeichnet, dass** das Fahrzeug (1) eine Verriegelungsvorrichtung (23) umfasst, welche die Abdeckung (11) in einer teilweise geöffneten Stellung nahe der geschlossenen Stellung verriegelt, wenn die Abdeckung (11) von der Haltevorrichtung (16) gelöst und von der geschlossenen Stellung in Richtung der geöffneten Stellung bewegt wird, und wobei die Verriegelungsvorrichtung (23) dazu funktionsfähig ist, eine Entriegelungsstellung zu erreichen, während die Abdeckung teilweise geöffnet ist, sodass ermöglicht wird, dass die Abdeckung (11) von der teilweise geöffneten Stellung in die geöffnete Stellung beweglich ist.

2. Fahrzeug nach Anspruch 1, wobei die Haltevorrichtung (16) eine Sicherungsvorrichtung (17) umfasst, welche eine Sicherungsstellung aufweist, in welcher die Abdeckung (11) in der geschlossenen Stellung gesichert ist, und wobei die Sicherungsvorrichtung (17) von der Sicherungsstellung in eine Lösestellung betätigbar ist, in welcher die Abdeckung (11) von der geschlossenen Stellung in Richtung der geöffneten Stellung beweglich ist.

3. Fahrzeug nach Anspruch 2, wobei, wenn sich die Sicherungsvorrichtung (17) in der Lösestellung befindet, die Sicherungsvorrichtung (17) beim Schließen der Abdeckung (11) automatisch in die Sicherungsstellung bewegt wird, und wobei die Sicherungsvorrichtung (17) ein manuell betätigbares Element (18) umfasst, welches an der Außenseite des Fahrzeugs (1) angeordnet ist, und wobei die Sicherungsvorrichtung (17) durch Betätigen des manuell betätigbaren Elements (18) von der Sicherungsstellung in die Lösestellung betätigbar ist.

4. Fahrzeug nach Anspruch 1, wobei die Haltevorrichtung eine Einrastvorrichtung (46, 47) umfasst, wobei die Abdeckung (11) bei ihrem Verschließen in die geschlossene Stellung einrastet und wobei die Abdeckung (11) von der Einrastvorrichtung (46, 47) lösbar ist, indem eine Kraft auf die Abdeckung (11) aufgebracht wird, die zur geöffneten Stellung hin ausgerichtet und größer als ein durch die Einrastvorrichtung (46, 47) festgelegter Schwellenwert ist.

5. Fahrzeug nach einem der vorstehenden Ansprüche, wobei die Abdeckung (11) zwischen der geschlossenen Stellung und der geöffneten Stellung um eine im Wesentlichen horizontale Achse (14) verschwenkbar ist und wobei die Abdeckung (11) beim Aufwärtsbewegen von der geschlossenen Stellung in Richtung der geöffneten Stellung entgegen der Einwirkung der Schwerkraft verschoben wird.

6. Fahrzeug nach einem der vorstehenden Ansprüche, wobei die Verriegelungsvorrichtung (23) mit einem Hakenteil (24) und einem Eingriffsteil (25) versehen ist, wobei einer dieser Teile (24, 25) an der Abdeckung (11) angeordnet ist und der andere Teil (24, 25) am Gehäuse (8) angeordnet ist und wobei der Hakenteil (24) zwischen einer Eingriffsstellung, in welcher bei der Bewegung der Abdeckung (11) von der geschlossenen Stellung in die teilweise geöffnete Stellung der Hakenteil (24) in den Eingriffsteil (25) zum Verriegeln der Abdeckung (11) eingreift, und einer Lösestellung, in welcher der Hakenteil (24) mit dem Eingriffsteil (25) nicht in Eingriff ist und die Abdeckung (11) über die teilweise geöffnete Stellung hinaus in Richtung der geöffneten Stellung beweglich ist, beweglich ist.

7. Fahrzeug nach Anspruch 6, wobei der Hakenteil (24) mittels einer Federeinrichtung (27) in die Eingriffsstellung vorgespannt ist.

8. Fahrzeug nach Anspruch 6 oder 7, wobei der Hakenteil (24) in der geschlossenen Stellung der Abdeckung (11) vom Eingriffsteil (25) beabstandet angeordnet ist und wobei der Hakenteil (24) nur beim Bewegen der Abdeckung (11) von der geschlossenen Stellung in die teilweise geöffnete Stellung in den Eingriffsteil (25) eingreift.

9. Fahrzeug nach einem der Ansprüche 6-8, wobei der Hakenteil (24) und/oder der Eingriffsteil (25) derart ausgebildet sind, dass, nachdem der Hakenteil (24) in der Eingriffsstellung durch Bewegen der Abdeckung (11) von der geschlossenen Stellung in die teilweise geöffnete Stellung in den Eingriffsteil (25) eingegriffen hat, die Abdeckung (11) von der teilweise geöffneten Stellung in Richtung der geschlossenen Stellung etwas zurück bewegt werden muss, um den Hakenteil (24) in die Lösestellung und aus dem Eingriff mit dem Eingriffsteil zu bringen, und wobei die Abdeckung (11) nur dann über die teilweise geöffnete Stellung hinaus in Richtung der geöffneten Stellung beweglich ist, während der Hakenteil (24) in der Lösestellung gehalten wird.

10. Fahrzeug nach einem der Ansprüche 6-9, wobei das Gehäuse (8) einen abnehmbaren Plattenteil (35) umfasst und wobei der Hakenteil (24) oder der Eingriffsteil (25) am Plattenteil (35) des Gehäuses (8) angeordnet ist und wobei der andere dieser Teile (24, 25) an der Abdeckung (11) angeordnet ist.

11. Fahrzeug nach einem der vorstehenden Ansprüche, wobei das Gehäuse (8) eine Umfangskante (40) umfasst, welche die Zugangsöffnung (10) definiert, und wobei die Abdeckung (11) eine Außenkante (41) umfasst, welche in der teilweise geöffneten Stellung in einer Entfernung von der Umfangskante (40) der Zugangsöffnung (10) angeordnet ist, die weniger als 20 cm, vorzugsweise weniger als 10 cm, zum Beispiel weniger als 5 cm, beträgt.

12. Fahrzeug nach einem der vorstehenden Ansprüche, wobei das Fahrzeug (1) mit einer Reinigungsvorrichtung (7) zum Reinigen eines Bodens (2) in einem Tierstall, der Tiere, insbesondere Kühe, enthält, versehen ist.

13. Verfahren zum Modifizieren eines autonomen Fahrzeugs (1) nach der Präambel von Anspruch 1, insbesondere auf einem Bauernhof, wobei eine Verriegelungsvorrichtung (23) nach dem kennzeichnenden Teil des Anspruchs 1 am Fahrzeug (1) angeordnet ist.

14. Verfahren nach Anspruch 13, wobei das Fahrzeug (1) nach Anspruch 10 ausgelegt ist und wobei der abnehmbare Plattenteil (35) des Gehäuses (8) des Fahrzeugs (1) durch einen Ersatzplattenteil (35) mit dem Hakenteil (24) oder dem Eingriffsteil (25) ersetzt ist, wobei der andere dieser Teile (24, 25) an der Abdeckung (11) angeordnet ist.

15. Umrüstsatz zum Ausführen des Verfahrens nach Anspruch 14, wobei der Umrüstsatz mit einem Ersatzplattenteil (35) zum Ersetzen des abnehmbaren Plattenteils, einem Eingriffsteil (25) und einem Hakenteil (24) versehen ist, wobei der Eingriffsteil (25) oder der Hakenteil (24) am Ersatzplattenteil (35) befestigbar ist und der andere dieser Teile (24, 25) dazu ausgelegt ist, an der Abdeckung (11) des Fahrzeugs (1) montiert zu werden.

## Revendications

1. Véhicule autonome destiné à exécuter une tâche en rapport avec des animaux, en particulier nettoyer un sol dans un abri pour animaux où se trouvent des animaux, tels que des vaches, ledit véhicule (1) comprenant :
- un système d'entraînement (4) pour entraîner le véhicule (1), ledit système d'entraînement (4) étant pourvu d'au moins un moteur d'entraînement électrique (43),
- un système de commande électronique (6) qui est raccordé au système d'entraînement (4) afin de le commander,
- un système de batterie (5) servant à emmagasiner de l'énergie électrique, ledit système de batterie (5) étant raccordé au système d'entraînement (4) et au système de commande (6),
- une enveloppe (8) comportant un espace intérieur (9), dans lequel sont disposés au moins partiellement le système de commande (6) et/ou le système de batterie (5), ladite enveloppe (8) étant pourvue d'une ouverture d'accès (10) servant à rendre l'espace intérieur (9) accessible, et d'un couvercle (11) qui est propre à être déplacé entre une position fermée, dans laquelle l'ouverture d'accès (10) est fermée par le couvercle (11), et une position ouverte, dans laquelle l'espace intérieur (9) de l'enveloppe (8) est accessible à travers l'ouverture d'accès (10),
- un dispositif de retenue (16) servant à retenir le couvercle (11), de manière libérable, dans la position fermée,
**caractérisé en ce que** le véhicule (1) comprend un dispositif de blocage (23), qui bloque le couvercle (11) dans une position partiellement ouverte proche de la position fermée si le couvercle (11) est libéré par le dispositif de retenue (16) et est déplacé de la position fermée en direction de la position ouverte, et ledit dispositif de blocage (23) est propre à être actionné pour atteindre une position débloquée, tandis que le couvercle est partiellement ouvert, de sorte qu'il soit possible de déplacer le couvercle (11) de la position partiellement ouverte à la position ouverte.

2. Véhicule selon la revendication 1, dans lequel le dispositif de retenue (16) comprend un dispositif d'assujettissement (17) ayant une position d'assujettissement, dans laquelle le couvercle (11) est assujetti dans la position fermée, et dans lequel le dispositif d'assujettissement (17) est propre à être actionné pour passer de ladite position d'assujettissement à une position de libération, dans laquelle le couvercle (11) peut être déplacé de la position fermée en direction de la position ouverte.

3. Véhicule selon la revendication 2, dans lequel, lorsque le dispositif d'assujettissement (17) se trouve dans la position de libération, le dispositif d'assujettissement (17) est automatiquement déplacé jusqu'à la position d'assujettissement lors de la fermeture du couvercle (11), et dans lequel le dispositif d'assujettissement (17) comprend un élément à actionnement manuel (18), qui est disposé sur l'extérieur du véhicule (1), et dans lequel le dispositif d'assujettissement (17) est propre à être actionné pour passer de la position d'assujettissement à la position de libération par l'actionnement de l'élément à actionnement manuel (18).

4. Véhicule selon la revendication 1, dans lequel le dispositif de retenue comprend un dispositif d'attache par emboîtement-pression (46, 47), dans lequel le couvercle (11) est attaché par emboîtement-pression dans la position fermée lors de sa fermeture, et dans lequel le couvercle (11) est propre à être libéré par détachement du dispositif d'attache par emboîtement-pression (46, 47) en appliquant une force sur le couvercle (11) qui est dirigée vers la position ouverte et qui est supérieure à une valeur seuil déterminée par le dispositif d'attache par emboîtement-pression (46, 47) .

5. Véhicule selon l'une des revendications précédentes, dans lequel le couvercle (11) est propre à être déplacé par le biais d'une articulation entre la position fermée et la position ouverte autour d'un axe sensiblement horizontal (14), et dans lequel le couvercle (11) est, lors de son déplacement de la position fermée en direction de la position ouverte vers le haut, déplacé à l'encontre de l'action de la force gravitationnelle.

6. Véhicule selon l'une des revendications précédentes, dans lequel le dispositif de blocage (23) est pourvu d'une partie formant crochet (24) et d'une partie de mise en prise (25), dans lequel l'une de ces parties (24, 25) est disposée sur le couvercle (11) et l'autre partie (24, 25) sur l'enveloppe (8), et dans lequel la partie formant crochet (24) est propre à être déplacée entre une position de mise en prise, dans laquelle, lors d'un déplacement du couvercle (11) de la position fermée à la position partiellement ouverte, la partie formant crochet (24) entre en prise avec la partie de mise en prise (25) pour bloquer le couvercle (11), et une position de libération, dans laquelle la partie formant crochet (24) n'est pas en prise avec la partie de mise en prise (25) et le couvercle (11) peut être déplacé au-delà de la position partiellement ouverte en direction de la position ouverte.

7. Véhicule selon la revendication 6, dans lequel la partie formant crochet (24) est pré-sollicitée vers la position de mise en prise à l'aide d'un moyen formant ressort (27).

8. Véhicule selon la revendication 6 ou 7, dans lequel la partie formant crochet (24) est située à une certaine distance de la partie de mise en prise (25) dans la position fermée du couvercle (11), et dans lequel la partie formant crochet (24) n'entre en prise avec la partie de mise en prise (25) que lors d'un déplacement du couvercle (11) de la position fermée à la position partiellement ouverte.

9. Véhicule selon l'une des revendications 6 à 8, dans lequel la partie formant crochet (24) et/ou la partie de mise en prise (25) sont formées de telle sorte que, une fois que la partie formant crochet (24) est entrée en prise avec la partie de mise en prise (25) dans la position de mise en prise par un déplacement du couvercle (11) de la position fermée à la position partiellement ouverte, le couvercle (11) doit être ramené légèrement de la position partiellement ouverte en direction de la position fermée afin de placer la partie formant crochet (24) dans la position de libération et de sorte qu'elle ne soit plus en prise avec la partie de mise en prise, et dans lequel ce n'est qu'après cela que le couvercle (11) peut être déplacé au-delà de la position partiellement ouverte en direction de la position ouverte, tandis que la partie formant crochet (24) est maintenue dans la position de libération.

10. Véhicule selon l'une des revendications 6 à 9, dans lequel l'enveloppe (8) comprend une partie formant plaque détachable (35), et dans lequel l'une de la partie formant crochet (24) et la partie de mise en prise (25) est disposée sur ladite partie formant plaque (35) de l'enveloppe (8), et dans lequel l'autre de ces parties (24, 25) est disposée sur le couvercle (11).

11. Véhicule selon l'une des revendications précédentes, dans lequel l'enveloppe (8) comprend un bord périphérique (40) qui définit l'ouverture d'accès (10), et dans lequel le couvercle (11) comprend un bord extérieur (41) qui, dans la position partiellement ouverte, est situé à une distance du bord périphérique (40) de l'ouverture d'accès (10) qui est inférieure à 20 cm, de préférence inférieure à 10 cm, par exemple inférieure à 5 cm.

12. Véhicule selon l'une des revendications précédentes, le véhicule (1) étant pourvu d'un dispositif de nettoyage (7) servant à nettoyer un sol (2) dans un abri pour animaux où se trouvent des animaux, en particulier des vaches.

13. Procédé de modification d'un véhicule autonome (1) selon le préambule de la revendication 1, en particulier dans une exploitation agricole, dans lequel un dispositif de blocage (23) selon la partie caractérisante de la revendication 1 est placé sur le véhicule (1).

14. Procédé selon la revendication 13, dans lequel le véhicule (1) est conçu selon la revendication 10, et dans lequel la partie formant plaque détachable (35) de l'enveloppe (8) du véhicule (1) est remplacée par une partie formant plaque de remplacement (35) comportant l'une de la partie formant crochet (24) et la partie de mise en prise (25), dans lequel l'autre de ces parties (24, 25) est disposée sur le couvercle (11).

15. Ensemble de conversion pour exécuter le procédé selon la revendication 14, l'ensemble de conversion étant fourni avec une partie formant plaque de remplacement (35) servant à remplacer la partie formant plaque détachable, une partie de mise en prise (25) et une partie formant crochet (24), dans lequel la partie de mise en prise (25) ou la partie formant crochet (24) est propre à être attachée à la partie formant plaque de remplacement (35), et l'autre de ces parties (24, 25) est conçue pour être adaptée sur le couvercle (11) du véhicule (1).
